Europäisches Patentamt

European Patent Office

Office européen des brevets

(11) Veröffentlichungsnummer: **0 240 688**

A1

# EUROPÄISCHE PATENTANMELDUNG

(21) Anmeldenummer: 87102707.4

(22) Anmeldetag: 26.02.87

(51) Int. Cl.³: **B 60 T 8/42**

(30) Priorität: 11.04.86 DE 3612185

(43) Veröffentlichungstag der Anmeldung:
14.10.87 Patentblatt 87/42

(84) Benannte Vertragsstaaten:
AT DE FR SE

(71) Anmelder: ROBERT BOSCH GMBH
Postfach 50
D-7000 Stuttgart 1(DE)

(72) Erfinder: Bertling, Hannes, Dr. Dipl.-Ing.
Alter Postweg 37
D-7143 Vaihingen/Enz(DE)

(54) Blockierschutzbremsanlage.

(57) Es wird eine mehrkreisige Blockierschutzbremsanlage (2) vorgeschlagen. Diese hat als Bremsdruckgeber einen zweikreisigen Tandemhauptbremszylinder (7) und an diesen angeschlossene Bremskreise (I, II). Wenigstens einer der Bremskreise (I) hat zwei Bremskreiszweige (Ia, Ib) und in jedem Bremskreiszweig eine Bremsdruckmodulationsventilanordnung (8, 9) und zwischen jeder dieser Bremsdruckmodulationsventilanordnungen (8, 9) und einem gemeinsamen Druckmittelsammelspeicher (16) und einer gemeinsamen Rückförderpumpe (18) ein Einwegventil (21, 22). Beide Einwegventile (21, 22) sind so ausgerichtet, daß sie beim Steuern der Bremsdruckmodulationsventilanordnungen (8, 9) in ihre Bremsdruckabsenkstellung Druckmittel aus den Radbremsen (12, 13) zum Druckmittelsammelspeicher (16) strömen lassen. Die Einwegventile (21, 22) verhindern im Blockierschutzfall, daß ein hoher Bremsdruck in einer der Radbremsen einen niedrigeren Bremsdruck in der anderen Radbremse erhöht. Dadurch wird vermieden, daß mittels des Bremsdrucks der einen Radbremse das Rad der anderen Radbremse blockiert wird.

EP 0 240 688 A1

R. 20555
25.3.1986 Sp/Pi

*1*

ROBERT BOSCH GMBH, 7000 STUTTGART 1

## Blockierschutzbremsanlage

Stand der Technik

Die Erfindung geht aus von einer Blockierschutzbremsanlage nach der Gattung des Patentanspruchs. Durch die GB-PS 2 036 222 ist eine solche Blockierschutzbremsanlage bekannt, bei der die Bremsdruckmodulationsventilanordnungen von zwei Bremskreiszweigen eines Bremskreises mit einem gemeinsamen Druckmittelsammelspeicher und einer gemeinsamen Rückförderpumpe verbunden sind. Es ist nicht auszuschließen, daß während einer kräftigen Bremsung ein Rad, das dem einen Bremskreiszweig zugeordnet ist, über eine trockene griffige Fahrbahnzone und ein anderes Rad, das zum anderen Bremskreiszweig gehört,über beispielsweise nasses Glatteis bewegt wird. In einem solchen Fall kann der Nachteil auftreten, daß bei einer vorgegebenen Leistung und Anlaufzeit der Rückförderpumpe und/oder Größe des Druckmittelsammelspeichers dann, wenn beispielsweise beide Bremsdruckmodulationsventilanordnungen gleichzeitig in ihre Bremsdruckabsenkstellungen gesteuert werden, Druckmittel aus dem zuerst genannten Bremskreiszweig in den Bremskreiszweig des über das nasse Glatteis geführten Rades strömt und dadurch dieses Rad blockiert oder in

...

blockiertem Zustand hält. Ein nachteiliges Blockieren des über das
Glatteis geführten Rades kann auch eintreten, wenn nach einer
vorangegangenen Bremsdruckabsenkung in der Radbremse des über eine
zunächst griffige Fahrbahnzone geführten Rades der Druckmittelsammelspeicher von der Rückförderpumpe noch nicht ausreichend entleert
wurde. Nachteiliger Bremsdruckanstieg in einer der Radbremsen tritt
auch auf, wenn auf einen Druckmittelsammelspeicher, der einem Eingang der Rückförderpumpe zugeordnet ist, verzichtet wird.

Vorteile der Erfindung

Die erfindungsgemäße Blockierschutzbremsanlage mit den kennzeichnenden Merkmalen des Anspruchs 1 und auch des Anspruchs 2 hat den Vorteil, daß durch Steuern der Bremsdruckmodulationsventilanordnungen
in ihre Bremsdruckabsenkstellungen keine Bremsdruckanstiege in den
zugeordneten Radbremszylindern stattfinden. Dadurch wird die Fahrsicherheit eines mit der erfindungsgemäßen Blockierschutzbremsanlage
ausgestatteten Fahrzeugs erhöht. Der Vorteil wird ohne Mehraufwand
für die Rückförderpumpe und/oder den Druckmittelsammelspeicher erreicht.

Zeichnung

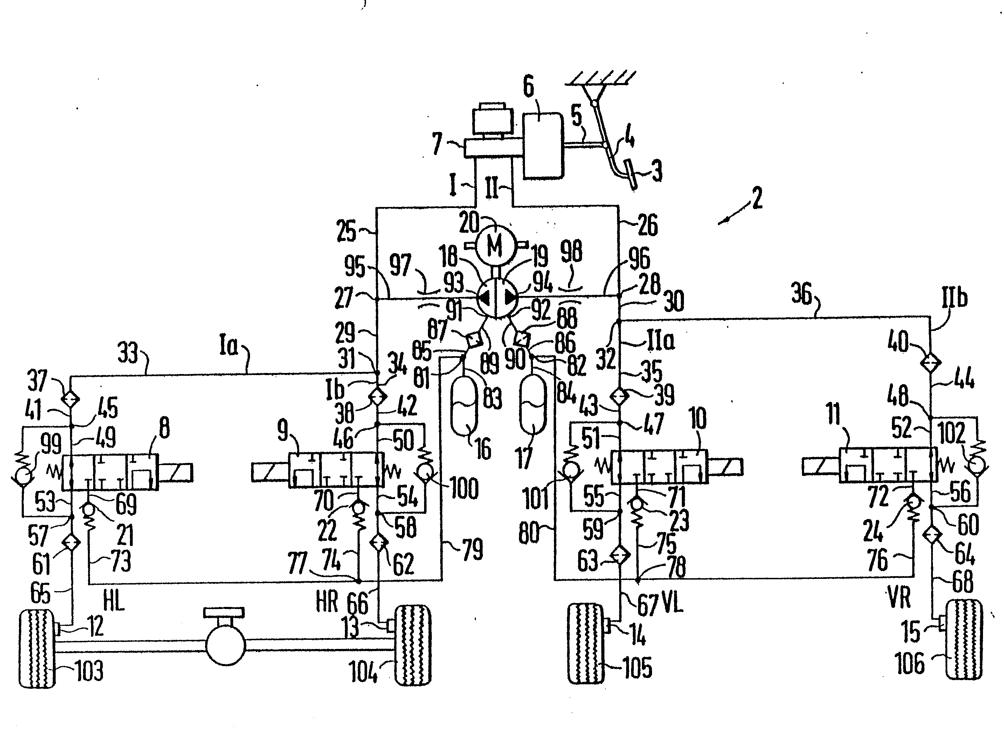

Ein Ausführungsbeispiel der erfindungsgemäßen Blockierschutzbremsanlage ist in Form eines Schemas in der Zeichnung dargestellt und in
der nachfolgenden Beschreibung näher erläutert.

Beschreibung des Ausführungsbeispiels

Die erfindungsgemäße Blockierschutzbremsanlage 2 hat ein Bremspedal
3, einen Bremspedalhebel 4, einen Pedalstößel 5, einen Bremskraftverstärker 6, einen Tandemhauptzylinder 7, zwei Bremskreise I und
II, vier Bremskreiszweige Ia, Ib, IIa, IIb, vier Bremsdruckmodula-

...

tionsventilanordnungen 8, 9, 10, 11, vier Radbremsen 12, 13, 14, 15, zwei Druckmittelsammelspeicher 16, 17, zwei Rückförderpumpen 18, 19 und einen für beide Rückförderpumpen gemeinsamen Antriebsmotor 20 sowie vier den Bremsdruckmodulationsventilanordnungen 8 bis 11 zugeordnete erfindungsgemäße Einwegventile 21, 22, 23, 24. Die Druckmittelsammelspeicher 16, 17 sind zur Realisierung des Erfindungsgedankens nicht erforderlich.

Das Bremspedal 3 ist über den Bremspedalhebel 4 und den Pedalstößel 5 mit dem Bremskraftverstärker 6 gekoppelt. Der Bremskraftverstärker 6 ist beispielsweise als Vakuumverstärker ausgebildet und kann dem Stand der Technik entnommen werden. An den Bremskraftverstärker 6 schließt sich der Tandemhauptbremszylinder 7 an, der ebenfalls dem Stand der Technik entnommen werden kann und nicht dargestellte Hauptzylinderkolben besitzt, von denen einer mittels des Bremskraftverstärkers 6 verschiebbar ist, wenn das Bremspedal 3 betätigt wird. Der Bremskraftverstärker 6 und der Tandemhauptbremszylinder 7 bilden einen Bremsdruckgeber für die beiden Bremskreise I, II. Anstelle des Tandemhauptbremszylinders 7 könnte natürlich auch ein andersartig ausgebildeter Hauptbremszylinder wie Twinhauptbremszylinder angeordnet werden.

Leitungen 24, 25, die zu den Bremskreisen I und II gehören, gehen von dem Tandemhauptbremszylinder 7 aus und führen zu ersten Verzweigungen 27 bzw. 28. An diese Verzweigungen 27 bzw. 28 schließen sich weitere Leitungen 29, 30 an, die an weiteren Verzweigungen 31 bzw. 32 enden. Die Bremskreiszweige Ia, Ib, IIa, IIb haben von den Verzweigungen 31 bzw. 32 ausgehende Leitungen 33, 34, 35, 36, die an Filtern 37, 38, 39 und 40 enden. Von diesen Filtern führen Leitungen 41, 42, 43, 44 zu weiteren Verzweigungen 45, 46, 47, 48. An diese Verzweigungen schließen sich über Leitungen 49, 50, 51, 52 die Bremsdruckmodulationsventilanordnungen 8, 9, 10 bzw. 11 an. Von je-

...

der der Bremsdruckmodulationsventilanordnungen geht eine Leitung 53, 54, 55, 56 aus. Diese Leitungen enden an Verzweigungen 57, 58, 59, 60, die zu weiteren Filtern 61, 62, 63, 64 führen. Weitere Leitungen 65, 66, 67, 68 verbinden diese Filter mit den Radbremsen 12, 13, 14, 15. Diese Radbremsen sind dem Stand der Technik entnehmbar und enthalten je einen oder zwei Radbremszylinder, die nicht dargestellt sind. Von den Bremsdruckmodulationsventilanordnungen gehen jeweils noch Leitungen 69, 70, 71, 72 aus, die zu den Einwegventilen 21 bis 24 führen. An diese Einwegventile schließen sich Leitungen 73, 74, 75, 76 an, die jeweils zu Verzweigungen 77 und 78 führen. Von diesen Verzweigungen gehen Leitungen 79 und 80 aus, die über Verzweigungen 81 bzw. 82 und Speicherleitungen 83 bzw. 84 mit den Druckmittelsammelspeichern 16 und 17 verbunden sind. An die Verzweigungen 81 bzw. 82 schließen sich Leitungen 85 bzw. 86, Filter 87 bzw. 88 und wiederum Leitungen 89 bzw. 90 an. Die Leitungen 89 bzw. 90 sind mit Eingängen 91 bzw. 92 der Rückförderpumpen 18 und 19 verbunden. Ausgänge 93 bzw. 94 der Rückförderpumpen 18, 19 sind über Leitungen 95, 96 mit den Verzweigungen 27, 28 verbunden. Bedarfsweise sind in die Leitungen 95 und 96 aus dem Stand der Technik entnehmbare Dämpfungsdrosseln 97 bzw. 98 eingebaut. Den Bremsdruckmodulationsventilanordnungen 8 bis 11 sind bekannte Sicherheitsbypaßventile 99, 100, 101, 102 zugeordnet. Diese Sicherheitsbypaßventile sind mit den Verzweigungen 45, 57 bzw. 46, 58 und 47, 59 sowie 48, 60 verbunden. Dabei sind die Sicherheitsbypaßventile 99 bis 102 so angeordnet, daß sie sich von den Radbremsen 12, 13, 14 und 15 aus gesehen in Richtung zum Tandemhauptbremszylinder 7 öffnen lassen.

Die Einwegventile 21 bis 24 sind so angeordnet, daß sie sich von der jeweils zugeordneten Bremsdruckmodulationsventilanordnung 8, 9, 10, 11 gesehen in Richtung zum nachgeordneten Druckmittelsammelspeicher 16 bzw. 17 öffnen lassen. Druckgefälle von den Druckmittelsammel-

...

speichern 16 bzw. 17 in Richtung der Bremsdruckmodulationsventilanordnungen 8, 9, 10, 11 wirken im Schließsinn auf die Einwegventile 21 bis 24.

Die Radbremsen 12 und 13 gehören beispielsweise zu Hinterrädern 103, 104. Die Radbremsen 14, 15 gehören demgemäß zu Vorderrädern 105 und 106. Aus der dargestellten und beschriebenen Anordnung ergibt sich, daß der Bremskreis I mit seinen Bremskreiszweigen Ia und Ib zur individuellen Beseitigung von Blockiergefahr an den Rädern der Hinterachse dient. Analog ist der Bremskreis II ausgebildet, so daß Bremsdrücke an den Vorderrädern 105 und 106 einzeln und dadurch individuell modulierbar sind zur Verhinderung von Radblockiergefahr. Ergänzend wird darauf hingewiesen, daß anstelle der achsweisen Aufteilung der Bremskreise I und II auch eine sogenannte diagonale Aufteilung realisierbar ist. Des weiteren wird noch darauf hingewiesen, daß beispielsweise zwecks Verbilligung der Blockierschutzbremsanlage 2 der Bremskreis I mit nur einer für beide Radbremsen 12, 13 gemeinsam Bremsdruckmodulationsventilanordnung ausgerüstet sein kann. Dabei erübrigt sich natürlich die Anordnung der Einwegventile 21 und 22.

Die Bremsdruckmodulationsventilanordnungen 8, 9, 10, 11 sind beispielsweise als 3/3-Wegeventile ausgebildet in einer in der GB-PS 2 036 222 beschriebenen Weise und haben je eine Grundstellung, in der sie die Radbremsen 12, 13, 14, 15 mit dem Tandemhauptbremszylinder 7 verbinden. Des weiteren haben die Bremsdruckmodulationsventilanordnungen 8 bis 11 Druckhaltestellungen zum Konstanthalten von Bremsdrücken in den Radbremsen 12 bis 15. Außerdem sind die Bremsdruckmodulationsventilanordnungen 8 bis 11 in Bremsdruckabsenkstellungen steuerbar, in denen sie die jeweiligen Radbremsen 12, 13, 14, 15 über das jeweilige Einwegventil 21, 22, 23 bzw. 24 mit dem zugeordneten Druckmittelsammelspeicher 16 bzw. 17 verbinden. Die Druck-

...

0240688

mittelsammelspeicher 16, 17 sind entleerbar mittels der Rückförderpumpen 18, 19, die gemeinsam von dem Antriebsmotor 20 antreibbar
sind. Druckmittel, das die Rückförderpumpen 18, 19 aus ihren Druckmittelsammelspeichern 16 bzw. 17 entnehmen, wird durch die Leitungen
95, 96 den Verzweigungen 27, 28 zugeführt und steht deshalb den
Bremskreisen I und II vor deren Bremsdruckmodulationsventilanordnungen 8, 9, 10, 11 zur Verfügung.

Die erfindungsgemäße Blockierschutzbremsanlage 2 arbeitet in der
nachfolgend beschriebenen Weise.

Bei Betätigung des Bremspedals 3 wird über den Bremspedalhebel 4 und
den Pedalstößel 5 der Bremskraftverstärker 6 in Betrieb gesetzt.
Dieser hat einen nicht dargestellten Verstärkerkolben, der den Tandemhauptbremszylinder 7 steuert. Dadurch entstehen in dem Tandemhauptbremszylinder Bremsdrücke, die sich in die Bremskreise I und II
und deren Bremskreiszweige Ia, Ib, IIa, IIb fortpflanzen. Dadurch
gelangen durch die Bremsdruckmodulationsventilanordnungen 8, 9, 10,
11 hindurch Bremsdrücke in die Radbremsen 12, 13, 14, 15. Wenn, während die Räder 103 bis 106 über trockene, griffige Fahrbahnzonen
rollen, das Bremspedal 3 nur schwach oder mäßig betätigt wird, besteht keine Radblockiergefahr und deshalb verbleiben die Bremsdruckmodulationsventilanordnungen 8 bis 11 in ihren dargestellten Grundstellungen.

Wird das Bremspedal 3 zunehmend kräftiger betätigt, so entsteht
schließlich an wenigstens einem der Räder Blockiergefahr. Im Falle,
daß dies das Rad 103 ist, steuert ein nicht dargestelltes Steuergerät die Bremsdruckmodulationsventilanordnung 8 in ihre Bremsdruckabsenkstellung und schaltet den Antriebsmotor 20 ein. Dadurch wird eine Verbindung zwischen dem Tandemhauptbremszylinder 7 und der zugeordneten Radbremse 12 unterbrochen und die Radbremse 12 wird durch

...

das Einwegventil 21 hindurch zum Druckmittelsammelspeicher 16 druckentlastet. Die Rückförderpumpe 18 entnimmt Druckmittel aus dem Druckmittelsammelspeicher 16 und drückt dieses zum Tandemhauptbremszylinder 7. Dabei bewirkt die Dämpfungsdrossel 97, daß von der Rückförderpumpe 18 ausgehende Druckstöße auf dem Weg zum Tandemhauptbremszylinder 7 gedämpft werden. Sobald das erwähnte Steuergerät erkannt hat, daß die Radblockiergefahr ausreichend vermindert ist, steuert es die Bremsdruckmodulationsventilanordnung 8 in ihre Bremsdruckhaltestellung oder ihre Grundstellung zurück. Letzteres bewirkt, daß mittels des in dem Tandemhauptbremszylinder 7 herrschenden Drucks der Bremsdruck in der Radbremse 12 erhöht wird. Dadurch steigen auf das Rad 103 wirkende Bremskräfte wieder an, so daß beispielsweise erneut Blockiergefahr auftreten kann. Das erwähnte Steuergerät erkennt auch diese Blockiergefahr und steuert, wenn eine vorbestimmte Schlupfgrenze erreicht ist, die Bremsdruckmodulationsventilanordnung 8 beispielsweise in ihre Bremsdruckhaltestellung, so daß der Bremsdruck in der Radbremse 12 nicht mehr weiter ansteigen kann. Ist wegen irgendwelcher Zufälle wie Wechsel auf eine Fahrbahnzone mit geringerem Reibwert die Radblockiergefahr zu sehr angestiegen, dann steuert das Steuergerät die Bremsdruckmodulationsventilanordnung 8 wiederum in ihre Bremsdruckabsenkstellung. Das beschriebene Spiel von Bremsdruckhalten und Bremsdruckabsenken und Erhöhen des Bremsdrucks wiederholt sich entsprechend der Stärke der Betätigung des Bremspedals 3 und der Beschaffenheit einer unter dem Rad 103 befindlichen Fahrbahnzone.

Der beschriebene Ablauf von Bremsdruckkonstanthalten, Bremsdruckabsenken und Bremsdruckerhöhen erfolgt auch für die Radbremsen 13, 14, 15, wenn deren zugeordnete Räder 104, 105 und 106 durch zu kräftige Betätigung des Bremspedals 3 überbremst werden.

Wenn die Räder 103 und 104 des Bremskreises I zunächst über eine auf ihrer ganzen Breite trockenen und griffigen Fahrbahn geführt werden

...

und dabei das Bremspedal 3 relativ kräftig betätigt wird, kann der
Fall eintreten, daß gleichzeitig in beiden Radbremsen 102 und 103
die Bremsdrücke abzusenken sind. Weil die Fahrbahn sehr griffig ist,
reicht es aus, relativ kleine Druckmittelmengen aus den Radbremsen
12 und 13 in den Druckmittelsammelspeicher 16 abfließen zu lassen.
Beide Mengen zusammen bewirken jedoch schon eine teilweise Ausnützung der Aufnahmekapazität des Druckmittelsammelspeichers 16. Wenn
nun während des noch in den Radbremsen 12 und 13 erfolgenden Druckabsenkens beispielsweise das Rad 104 auf eine mit Wasser und/oder
Eis bedeckte Fahrbahnzone gerät, kann der Druck in der Radbremse 13
möglicherweise nicht mehr ausreichend abgesenkt werden, weil die
Rückförderpumpe 18 den Druck in dem Druckmittelsammelspeicher 16
noch nicht ausreichend abgesenkt hat. Dadurch bleibt das über die
nasse Fahrbahn bzw. das Eis geführte Rad überbremst. Sobald jedoch
die Rückförderpumpe 18 den Druckmittelsammelspeicher 16 ausreichend
entleert hat, verschwindet die Radblockiergefahr an dem Rad 104.

Wenn eine Fahrbahn auf einem Streifen, über den das Rad 103 geführt
wird, verhältnismäßig griffig ist, und auf einem anderen Streifen,
über den das Rad 104 geführt wird, mit Wasser bedeckt und/oder vereist ist, so wird bei kräftiger Betätigung des Bremspedals 3 jedenfalls das Rad 104 überbremst. Demzufolge steuert das Steuergerät die
Bremsdruckmodulationsventilanordnung 9 in ihre Druckabsenkstellung
und eine relativ große Druckmittelmenge fließt durch das Einwegventil 22 hindurch zum Druckmittelsammelspeicher 16. Tritt der Fall
ein, daß während einer beinahe ausreichenden Bremsdruckabsenkung in
der Radbremse 13 das Rad 103 auf eine weniger griffige Fahrbahnzone
gerät, wodurch eine Bremsdruckabsenkung in der Radbremse 12 eingeleitet wird, so ist nicht auszuschließen, daß die aus der Radbremse
12 abströmende Druckmittelmenge den Druckmittelsammelspeicher 16 auf
einen Druck auflädt, der über dem Blockierdruck der Radbremse 13
liegt. In diesem Fall schützt das Einwegventil 22 in erfindungsgemäßer Weise die Radbremse 13 davor, daß in sie ein Druck hineingelangt, der das Rad 104 erneut und während einer nachteilig langen Zeitspanne blockieren würde. Dieser Vorteil macht sich ausgeprägt bemerkbar dann, wenn während einer Bremsdruckabsenkung in der Radbremse 13 der situationsbedingt günstigste Bremsdruck gerade erreicht wird und gleichzeitig für die Radbremse 12 eine große Absenkung eines sehr hohen Bremsdrucks ausgelöst wird. Das Einwegventil 21 wirkt im anderen Bremskreiszweig, wenn der Bremsdruck dort der niedrigere ist.

Weil der Bremskreis II gleich aufgebaut ist wie der Bremskreis I, erübrigt sich die Beschreibung der im Bremskreis II ablaufenden Vorgänge.

Die Sicherheitsbypaßventile 99 bis 102 sorgen dafür, daß im Falle des Festhängens der Bremsdruckmodulationsventilanordnungen 8, 9, 10, 11 in ihren Bremsdruckhaltestellungen oder Bremsdruckabsenkstellungen Bremsdrücke in den Radbremsen 12, 13, 14, 15 willkürlich durch Loslassen des Bremspedals 3 absenkbar sind.

R. 20555
25.3.1986 Sp/Pi

ROBERT BOSCH GMBH, 7000 STUTTGART 1

Ansprüche

1. Blockierschutzbremsanlage mit einem Bremsdruckgeber und an diesen angeschlossenen Bremskreisen, von denen wenigstens einer zwei an Radbremszylindern endende Bremskreiszweige und je Bremskreiszweig eine im Blockierschutzbetrieb wirksame Bremsdruckmodulationsventilanordnung und für diese Bremskreiszweige eine gemeinsame Rückförderpumpe hat, die im Blockierschutzfall aus den Bremskreiszweigen entnommenes Druckmittel in den Bremskreis zurückfördert, dadurch gekennzeichnet, daß zwischen jeder der Bremsdruckmodulationsventilanordnungen (8, 9) des Bremskreises und der gemeinsamen Rückförderpumpe (18) ein zu dieser sich öffnendes Einwegventil (21, 22) angeordnet ist.

2. Blockierschutzbremsanlage nach Anspruch 1, dadurch gekennzeichnet, daß einem Eingang (91) der Rückförderpumpe (18) ein durch die Einwegventile (21, 22) füllbarer Druckmittelsammelspeicher (16) zugeordnet ist.

Europäisches
Patentamt

# EUROPÄISCHER RECHERCHENBERICHT

Nummer der Anmeldung

EP 87 10 2707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 944 856 (BOSCH)<br>* Seite 9, Absatz 1; Figur 3 * | 1 | B 60 T 8/42 |
| P,A | PATENT ABSTRACTS OF JAPAN, Band 10, Nr. 211 (M-501)[2267], 24. Juli 1986; & JP-A-61 50 861 (NIPPON DENSO CO. LTD) 13-03-1986 | 1 | |
| A | DE-A-3 436 223 (TEVES)<br>* Seite 11, Zeilen 14-19; Figuren 1,2 * | 1 | |
| A | GB-A-2 147 963 (BOSCH)<br>* Zusammenfassung; Figuren * | 2 | |
| A | PATENT ABSTRACTS OF JAPAN, Band 7, Nr. 92 (M-208)[1237], 16. April 1983; & JP-A-58 16 946 (NIPPON AIR BRAKE K.K.) 31-01-1983 | 2 | RECHERCHIERTE SACHGEBIETE (Int. Cl.4)<br><br>B 60 T |

Der vorliegende Recherchenbericht wurde für alle Patentansprüche erstellt

| Recherchenort | Abschlußdatum der Recherche | Prüfer |
|---|---|---|
| DEN HAAG | 06-07-1987 | BLURTON M.D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82